# EUROPÄISCHE PATENTANMELDUNG

(11) **EP 0 561 739 A1**
(43) Veröffentlichungstag der Anmeldung: **22.09.1993**
(21) Anmeldenummer: 93810174.8
(22) Anmeldetag: 09.03.1993
(51) Int. Cl.: F27B 9/16, B29D 11/00

(54) **Vorrichtung zur Wärmebehandlung von ophthalmischen Linsen, insbesondere von Kontaktlinsen**

(30) Priorität: 18.03.1992 EP 92810196
(71) Anmelder: CIBA-GEIGY AG, CH-4002 Basel (CH)
(72) Erfinder: Uftring, Winfried, W-8755 Alzenau 2 (DE); Bachmann, Theo, W-8751 Heigenbrücken (DE); Geis, Helmut, W-8752 Kleinostheim (DE); Haase, Lothar, W-5222 Morsbach/Sieg (DE)

(57) **Zusammenfassung**

Bei einer Vorrichtung zur Wärmebehandlung von ophthalmischen Linsen, insbesondere von Kontaktlinsen, die ein geschlossen ausgebildetes etwa zylindrisches Gehäuse (4) mit einer Zuführöffnung (5) und mit einer Abführöffnung, Transportmittel für den Transport der innerhalb von Formen (F) befindlichen ophthalmischen Linsen entlang einer innerhalb des Gehäuses (4) angeordneten, die Zuführ- und die Abführöffnung verbindenden offenen Transportbahn (P) und innerhalb des Gehäuses (4) angeordnete Heizmittel (11,12) umfasst, ist die offene Transportbahn (P) innerhalb des Gehäuses (4) im wesentlichen spiralenförmig ausgebildet und sind die Heizmittel (11,12) im wesentlichen ober- und unterhalb der Transportbahn (P) angeordnet.

## Beschreibung

Die Erfindung betrifft eine Vorrichtung zur Wärmebehandlung von ophthalmischen Linsen, insbesondere von Kontaktlinsen, gemäss Oberbegriff des Patentanspruches 1.

Die Herstellung von ophthalmischen Linsen, insbesondere von Kontaktlinsen, schliesst neben einer Reihe von Fertigungsschritten, wie beispielsweise der Erstellung von Giessformen, dem Vorbereiten eines Monomerengemisches, dem Giessvorgang usf., auch Wärmebehandlungsschritte ein. So erfolgt vielfach die Polymerisation des in die Giessform eingefüllten Monomerengemisches zur Herstellung der ophthalmischen Linse durch Einbringen der gefüllten Form in ein ofenartiges Behältnis und anschliessende Wärmebehandlung. Bei den auf diese Weise hergestellten Linsen kann es sich um sogenanntes Halbzeug handeln, welches in weiteren Fertigungsschritten zur gewünschten Linse geformt wird, es kann sich aber auch um Kontaktlinsen handeln, welche in einem sogenannten Ein-Stufen-Giessprozess (Fullmold-Verfahren) hergestellt werden.

Zur Herstellung von gefärbten Kontaktlinsen, beispielsweise von Iris-Kontaktlinsen, ist noch ein weiterer Wärmebehandlungsschritt erforderlich. Dabei werden die zu färbenden Kontaktlinsen in sogenannte Färbeformen eingebracht und ein bestimmtes Volumen einer Farbstofflösung der gewünschten Farbe zugegeben. Zur Erzielung einer dauerhaften Färbung der Kontaktlinsen werden die Färbeformen mit den Linsen und der Farbstofflösung sodann für eine bestimmte Zeit einer Wärmebehandlung unterzogen. Nach der Wärmebehandlung können die gefärbten Kontaktlinsen entnommen werden und gegebenenfalls noch einer weiteren Behandlung zugeführt werden.

Die Wärmebehandlung wird vielfach in einem sogenannten "batch-Prozess" durchgeführt. Dabei wird eine Anzahl von Giessformen mit Monomerengemisch oder von Färbeformen mit den zu färbenden Kontaktlinsen zunächst in eine Art von Ofen eingebracht. Nachdem der Ofen gefüllt ist, wird dieser aufgeheizt, und die Formen werden während der erforderlichen Zeit der Wärme ausgesetzt. Danach wird der Ofen mehr oder weniger abgekühlt, und die Formen können entnommen werden. Abgesehen davon, dass diese Form der Wärmebehandlung sehr zeitaufwendig ist und überdies eine genaue Beobachtung des Fortschrittes der Wärmebehandlung und dazu zusätzliches Personal erfordert, kann vielfach nicht gewährleistet werden, dass alle Linsen derselben Wärmebehandlungsdauer ausgesetzt sind. Es ist auch ein sogenannter Drehofen bekannt, der eine drehbare Scheibe umfasst, auf welche die Formen abgesetzt werden, um sodann langsam durch eine elektrisch beheizte Heizkammer transportiert zu werden. Das Absetzen und die Entnahme der Formen erfolgt manuell und durch dieselbe Öffnung, sodass auch kein richtiger kontinuierlicher Betrieb erfolgen kann. Die Verweilzeiten der Formen im Ofen sind nicht für alle Linsen exakt gleich lang, sodass es zu Qualitätsunterschieden bei den hergestellten LInsen kommen kann. Auch in diesem Fall ist zusätzliches Personal für die Beschickung und die Entleerung des Ofens erforderlich, welches den Fortschritt der Wärmebehandlung der Linsen genau überwachen muss.

Eine gewisse Verbesserung wird mit dem sogenannten Flachbettofen errreicht. Dieser umfasst ein Gehäuse mit einer Plexiglashaube. Im Inneren des Gehäuses ist eine endlose Kette mit Halterungen für die Formen mäanderförmig angeordnet und bewegbar. Die Bewegungsgeschwindigkeit der Kette ist einstellbar. Unterhalb der mäanderförmig angeordneten Kette sind elektrische Heizelemente angeordnet, welche für die Heizung des Ofens sorgen. An einem Ende des Gehäuses werden die Formen in die auf der Kette vorgesehenen Halterungen eingesetzt, am anderen Ende des Gehäuses können sie wieder entnommen werden. Zwar ist mit diesem Flachbettofen ein kontinuierlicher Betrieb möglich, jedoch erfolgt das Einsetzen der Formen in die Halterungen und das Entnehmen der Formen aus den Halterungen manuell, sodass wiederum zusätzliches Personal erforderlich ist, welches überdies ständig bereitstehen muss, um entweder Formen in die Halterungen einzusetzen oder Formen aus den Halterungen zu entnehmen. Überdies weisen derartige Flachbettöfen verhältnismässig grosse Abmessungen auf; ihre Länge beträgt bis zu etwa 5 m, die Breite beträgt etwa 1,5 m und mehr.

Es besteht daher die Aufgabe, eine Vorrichtung zur Wärmebehandlung von ophthalmischen Linsen, insbesondere von Kontaktlinsen, zu schaffen, welche die zuvor geschilderten Nachteile behebt. Insbesondere soll die neue Vorrichtung eine gleichmässige Wärmebehandlung der Linsen erlauben, und die Dauer der Wärmebehandlung der Linsen soll gleich lang sein. Auch soll die neue Vorrichtung einen kontinuierlichen Betrieb erlauben und eine weitgehende Automatisierung ermöglichen.

Die Vorrichtung soll überdies kompakt in ihren Abmessungen sein und einen flexiblen Einsatz erlauben. So soll die Vorrichtung sowohl für die Wärmebehandlung bei der Polymerisation des Monomerengemisches als auch zur Wärmebehandlung von zu färbenden Kontaktlinsen einsetzbar sein.

All diese und noch weitere Aufgaben werden durch eine Vorrichtung zur Wärmebehandlung von ophthalmischen Linsen, insbesondere von Kontaktlinsen, gelöst, welche die im kennzeichnenden Teil des Patentanspruches 1 angeführten Merkmale aufweist. Weitere besonders bevorzugte Ausführungsvarianten sind Gegenstand der abhängigen Patentansprüche.

Bei der neuen Vorrichtung zur Wärmebehandlung von ophthalmischen Linsen, insbesondere von Kontaktlinsen, die ein geschlossen ausgebildetes etwa zylindrisches Gehäuse mit einer Zuführ- und mit einer Abführöffnung, Transportmittel für den Transport der innerhalb von Formen befindlichen ophthalmischen Linsen entlang einer innerhalb des Gehäuses angeordneten, die Zuführ- und die Abführöffnung verbindenden offenen Transportbahn und innerhalb des Gehäuses angeordnete Heizmittel umfasst, ist die offene Transportbahn innerhalb des Gehäuses erfindungsgemäss im wesentlichen spiralenförmig ausgebildet ist und sind die Heizmittel im wesentlichen ober- und unterhalb der Transportbahn angeordnet. Die derart ausgebildete Vorrichtung ist für einen kontinuierlichen Betrieb bestens geeignet. Die spiralenförmig angeordnete Transportbahn erlaubt eine sehr kompakte Ausbildung der Vorrichtung, selbst bei verhältnismässig langen Transportwegen, um die erforderliche Wärmebehandlungsdauer zu garantieren. Die erfindungsgemässe Anordnung der Heizelemente gewährleistet eine sehr gleichmässige Wärmebehandlung der durch die Vorrichtung aansportierten Giessformen mit dem zu polymerisierenden Monomerengemisch bzw. mit der zu färbenden Kontaktlinse.

Dadurch, dass die Heizmittel ober- und unterhalb der Transportbahn etwa spiralenförmig angeordnet sind und im wesentlichen deckungsgleich mit der Transportbahn für die ophthalmischen Linsen sind, wird die Wärmestrahlung auf den Bereich konzentriert, in dem sich die Formen befinden.

Die Ausbildung der Heizmittel ober- und unterhalb der Transportbahn als System von flüssigkeitsdurchstömten röhrenförmigen Heizschlangen, die mit einem thermostatisierbaren Flüssigkeitsbad verbunden sind, ist besonders einfach realisierbar.

Das gleichmässig von der beheizten Flüssigkeit durchströmte Röhrensystem erzeugt eine sehr homogene Heizzone, die aufgrund der speziellen Anordnung der Heizspiralen genau auf die Transportbahn der Formen durch die Vorrichtung konzentriert ist. Überdies ist diese Art der Heizug auch sehr einfach zu regeln, indem die Temperatur der Flüssigkeit im Flüssigkeitsbad erhöht oder erniedrigt wird und/oder die Strömungsgeschwindigkeit der beheizten Flüssigkeit durch das Röhrensystem verändert wird. Gegenüber Schwankungen der Umgebungstemperatur ist diese Form der Heizung ebenfalls relativ unempfindlich, da die Wärmekapazität des Flüssigkeitsbades im allgemeinen relativ gross ist und da die Flüssigkeit im allgemeinen relativ träge auf derartige Temperaturschwankungen reagiert. Vorzugsweise sind an verschiedenen Punkten der Transportbahn, entlang der die Formen geführt werden, mehrere Temperaturfühler angeordnet, welche die Temperatur in der Transportbahn örtlich überwachen. Diese sind mit Heizmitteln für das Flüssigkeitsbad und mit Pumpeinrichtungen für die Flüssigkeit gekoppelt. Bei eventuellen Abweichungen der Temperatur vom vorgegebenen Sollwert geben die Temperaturfühler ein entsprechendes Signal weiter, um die Heizleistung der Heizmittel und/oder die Pumpleistung der Pumpen entsprechend anzupasssen.

In einer besonders bevorzugten Ausführungsform sind die Heizmittel auf zwei ortsfest innerhalb des Gehäuses in einem Abstand von etwa 40 mm bis etwa 60 mm übereinander angeordneten etwa kreisförmigen Böden angeordnet und sind die Transportmittel durch einen zwischen dem oberen und dem unteren Boden angeordeten rotierbaren Drehteller gebildet. Die Transportbahn ist dabei durch ein etwa spiralenförmig am oberen Boden angeordnetes und vertikal vom oberen Boden in Richtung des Drehtellers abstehendes Führungsorgan festgelegt. Bei der Rotation des Drehtellers werden die auf dem Drehteller befindlichen Formen von der Zuführöffnung entlang des Führungsorganes über die Oberfläche des Drehtellers zur Abführöffnung bewegt.

Vorzugsweise ist der Drehteller in einem Abstand von etwa 30 mm bis etwa 35 mm unterhalb des oberen Bodens angeordnet ist.

Um sicher zu gewährleisten, dass die Formen von dem rotierenden Drehtellers entlang des Transportweges mitgenommen werden, wird die dem oberen Boden zugewandte Oberseite des Drehtellers vorzugsweise mit radial verlaufenden Rippen, Leisten oder ähnlichen Mitnahmeelementen versehen, die sich von etwa der Mitte des Drehtellers bis etwa an den äusseren Rand des Drehtellers erstrecken.

Besonders vorteilhaft ist es, wenn sich das Führungsorgan wenigstens bis zur Hälfte des Abstandes zwischen dem oberen Boden und dem Drehteller erstreckt und vorzugsweise bis kurz vor die Rippen, Leisten oder ähnlichen Mitnahmeelemente reicht. Auf diese Weise wird die von den Heizmitteln ober- und unterhalb des Drehtellers abgestrahlte Wärme auf die Transportbahn der Formen konzentriert, wobei benachbarte Windungen des Führungsorgans eine Art Wärmekanal begrenzen.

Vorzugsweise weisen benachbarte Windungen des spiralenförmig angeordneten Führungsorgans einen Abstand von etwa 35 mm bis etwa 45 mm auf.

Durch die Wahl eines schlecht wärmeleitenden Materials für das Führungsorgan wirkt dieses als thermisches Abschottorgan gegenüber der jeweils benachbarten Windung der Transportbahn.

Zur Gewährleistung eines möglichst gleichmässigen Vorschubes der Formen entlang der spiralenförmigen Transportbahn ist der Drehteller vorzugsweise motorisch antreibbar. Durch die Verwendung eines Antriebsmotors, dessen Drehgeschwindigkeit regelbar ist, kann auch die Drehgeschwindigkeit des Drehtellers geregelt werden und auf diese Weise, bei vorgegebener Länge der Transportbahn für die Formen in Spiralen über die Oberfläche des Drehtellers, die Dauer der Wärmebehandlung des in den Giessformen befindlichen, zu polymerisierenden Monomerengemisches bzw. der in den Färbeformen befindlichen zu färbenden Kontaktlinsen den erforderlichen optimalen Zeiten angepasst werden. Dabei ist es besonders vorteilhaft, wenn der Antrieb für die Drehteller ein Schneckengetriebemotor ist.

Eine besonders bevorzugte und platzsparende Ausführungsvariante der erfindungsgemässen Vorrichtung ist dadurch gekennzeichnet, dass die Zuführöffnung in der Umgebung des Zentrums des Gehäuses angeordnet ist, während die Abführöffnung im Bereich der Seitenwandung des Gehäuses vorgesehen ist. Vorzugsweise mündet dabei die Zuführöffnung in einen vertikal angeordneten Schacht, der sich von der Oberseite des Gehäuses durch den oberen Boden bis kurz vor des Drehtellers erstreckt.

Besonders vorteilhaft ist es, wenn der Schacht im Mündungsbereich oberhalb des Drehtellers in Entsprechung zu den Abmessungen der gängigen Formen einen etwa kreisförmigen Querschnitt aufweist, dessen Durchmesser von etwa 30mm bis etwa 35 mm beträgt.

Zur Erhöhung der Automatisierbarkeit der erfindungsgemässen Vorrichtung endet oberhalb und unmittelbar anschliessend an der Rand der Zuführöffnung ein Transportmittel, beispielsweise ein endlos umlaufendes, motorisch antreibbares Förderband, über welches die Formen mit den ophthalmischen Linsen zu der Zuführöffnung transport werden.

Ein besonders reibungsloser Betrieb der erfindungsgemässen Vorrichtung ist dadurch sichergestellt, dass an der Mündung des Schachtes oberhalb der Drehscheibe ein Abstreifer angeordnet ist, der zur Sicherstellung der korrekten Lage der die ophthalmischen Linsen enthaltenden Formen vorgesehen ist.

Zur Steigerung der Automatisierbarkeit des Betriebes der erfindungsgemässen Vorrichtung mündet bei einem bevorzugten Ausführungsbeispiel die Abführöffnung in eine ausserhalb des Gehäuses angeordnete Transportrampe, welche etwa tangential zum Umfang des Drehtellers orientiert ist.

Bei einer weiteren sehr bevorzugten Ausführungsvariante ist die Farbstoffzugabe in die Vorrichtung integriert. Insbesondere ist bei dieser Variante der erfindungsgemässen Vorrichtung eine Dispensiervorrichtung für eine dosierbare Menge einer Farbstofflösung vorgesehen, deren Austrittsöffnung nach der Zuführöffnung im Bereich oberhalb der innersten Windung der Transportbahn angeordnet ist. Der Auslösezeitpunkt für die Zugabe der zu dosierenden Menge einer Farbstofflösung wird vorzugsweise über eine Lichtschranke gesteuert. Diese Lichtschranke ist vorzugsweise als Infrarot-Lichttaster ausgebildet und ist zwischen der Mündung des Zuführschachtes und der Austrittsöffnung der Dispensiervorrichtung in der innersten Windung der Transportweges angeordnet. Die Lichtschranke spricht immer nur dann an, wenn sie von einer Form passiert wird, und löst die zeitgerechte Zugabe der Farbstofflösung aus. Eine derart modifizierte Vorrichtung eignet sich insbesondere besonders gut in der Verwendung als Färbetrockenofen für in einseitig offen ausgebildete Färbeformen eingebettete zu färbende Kontaktlinsen.

Die Vielfältigkeit der Einsatzmöglichkeiten der erfindungsgemässen Vorrichtung zeigt sich aber auch darin, dass sie in ihren unterschiedlichen bevorzugten Ausführungsvarianten nicht nur als Färbetrockenofen sondern insbesondere auch als Polymerisationsofen für innerhalb von Giessformen enthaltenes Monomerengemisch zur Herstellung von Kontaktlinsen verwendet werden kann.

Im folgenden wird die Erfindung mit allen ihr als wesentlich zugehörigen Teilen anhand eines in der Zeichnung zum Teil schematisch dargestellten Ausführungsbeispieles näher erläutert. Es zeigen:
- Fig. 1: eine perspektivische Ansicht der erfindungsgemässen Vorrichtung in teilweise geschnittener Darstellung,
- Fig. 2: eine Ansicht gemäss Schnittlinie II-II in Fig. 1 und
- Fig. 3: eine perspektivische Ansicht der Ausgangsseite der Vorrichtung nach Fig. 1.

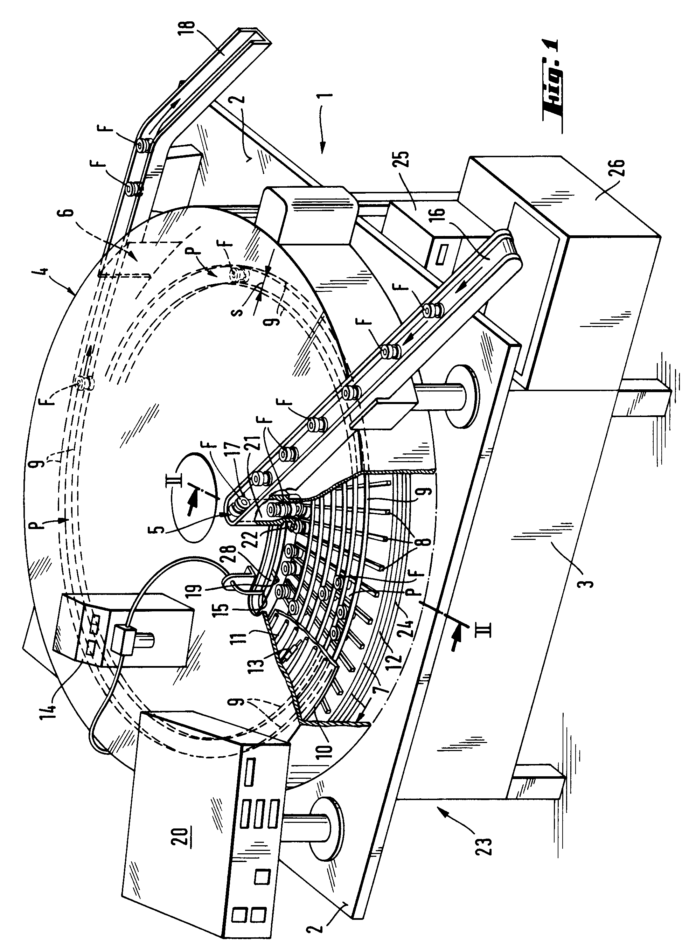

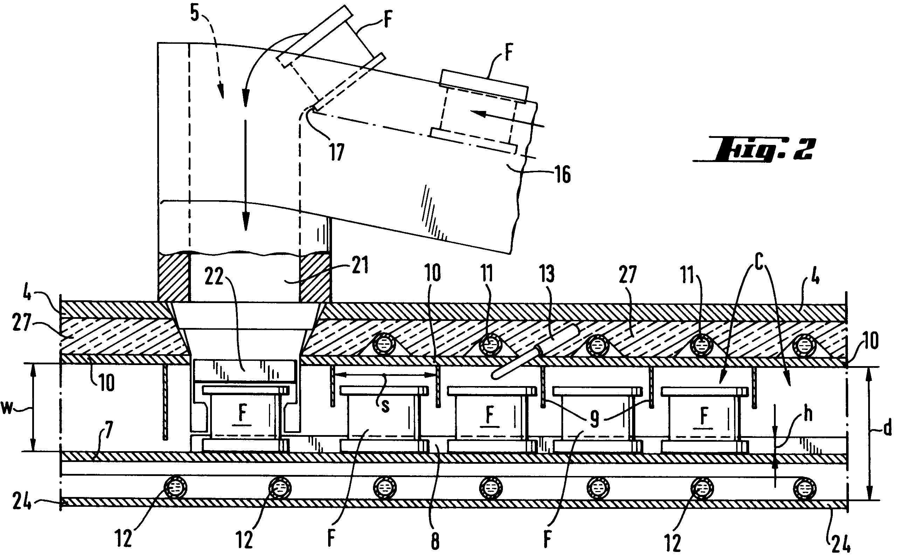

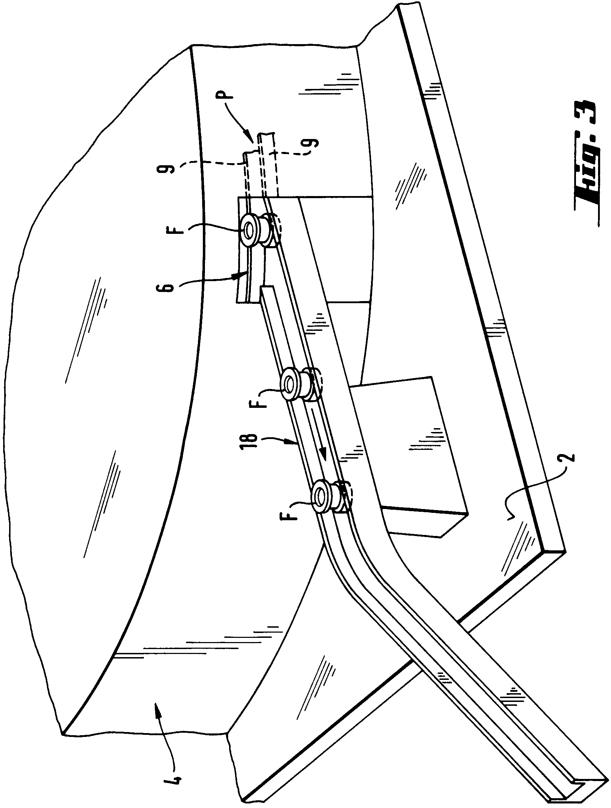

Eine erfindungsgemässe Vorrichtung zur Wärmebehandlung von ophthalmischen Linsen, insbesondere von Kontaktlinsen, ist in Fig. 1 gesamthaft mit dem Bezugszeichen 1 versehen. Sie umfasst ein geschlossen ausgebildetes etwa zylindrisches Gehäuse 4 mit einer Zuführöffnung 5 und mit einer Abführöffnung 6 (Fig. 3)ausgangsseitig der Vorrichtung. Das Gehäuse 4 ist auf einer Platte 2 angeordnet, welche den oberen Teil einer tischähnlichen Anordnung 23 darstellt. Innerhalb des Gehäuses 4 ist etwa auf halber Höhe des Gehäuses ein rotierbarer Drehteller 7 angeordnet, dessen Durchmesser von etwa 0,8 m bis etwa 2 m, vorzugsweise etwa 1,3 m beträgt. An der Oberseite des Drehtellers sind etwa radial verlaufende Rippen oder Leisten 8 oder ähnliche Mitnahmeelemente vorgesehen, die sich etwa vom Zentrum des Drehtellers 7 bis zum Umfang der Drehscheibe erstrecken und eine Höhe h von etwa 5 mm bis etwa 10 mm aufweisen (Fig. 2). Oberhalb und unterhalb des Drehtellers 7 sind zwei Böden 10 und 24 angeordnet. Der Abstand d des oberen Bodens 10 und des unteren Bodens 24 beträgt von etwa 40 mm bis etwa 60 mm (Fig. 2). Dabei ist der Drehteller 7 in einem Abstand w von etwa 30 mm bis etwa 35 mm unterhalb des oberen Bodens 10 angeordnet (Fig. 2).

An der Unterseite des oberen Bodens 10 ist ein Führungsorgan 9 angebracht. Dieses ist durch ein spiralenförmig angeordnetes und von der Unterseite des oberen Bodens 10 vertikal abstehendes Führungsblech gebildet, dessen eines Ende etwa im Bereich des Zentrums des oberen Bodens angeordnet ist, und dessen anderes Ende im Bereich Abführöffnung 6 (Fig. 3) des Gehäuses 4 etwa tangential zum Umfang des oberen Bodens 10 verläuft. Vorzugsweise besteht das Führungsorgan 9 aus einem Material, das schlecht Wärmeleitungseigenschaften aufweist. Gemäss Fig. 2 beträgt der Abstand s zweier benachbarter Windungen des spiralenförmig angeordneten Führungsorganes 9 etwa 35 mm bis etwa 45 mm. Das Führungsorgan erstreckt sich dabei wenigstens etwa bis zur Hälfte des Abstandes w zwischen dem oberen Boden 10 und dem Drehteller 7. Benachbarte Windungen des spiralenförmig angeordneten Führungsorganes 9 begrenzen auf diese Weise eine kanalförmige Transportbahn P, die beginnend von der Zuführöffnung 5 spiralenförmig aufgewickelt bis zur Abfuhröffnung 6 reicht. Die Höhe der kanalförmigen Transportbahn P beträgt dabei von etwa 30 mm bis 35 mm, ihre Weite etwa 35 mm bis 45 mm. Die Gesamtlänge der Transportbahn P beträgt etwa 20 m bis etwa 30 m.

Auf der Oberseite des oberen und des unteren Bodens 10 bzw. 24 sind Heizmittel 11 bzw. 12 angeordnet. Die Anordnung der Heizmittel 11 bzw. 12 ist dabei derart, dass sie jeweils etwa zwischen zwei benachbarten Windungen des spiralenförmig verlaufenden Führungsorganes 9 liegen. In dem in den Figuren dargestellten Ausführungsbeispiel der Erfindung sind die Heizmittel 11 und 12 als System von röhrenförmigen Heizschlangen ausgebildet. Die Heizschlangen sind jeweils mit einem Flüssigkeitsbad 26 verbunden, welches über eine regelbare Heizeinrichtung 25 thermostatisierbar ist. Nicht dargestellte Pumpen oder ähnliche Transportsysteme sorgen für einen kontinuierlichen Durchfluss der thermostatisierten Heizflüssigkeit durch die Heizschlangen 11 bzw. 12. Gemäss Fig. 1 und 2 sind an verschiedenen Punkten der Transportbahn P Temperaturfühler 13 angeordnet, welche die Temperatur in der kanalförmigen Transportbahn P örtlich überwachen. Die Temperaturfühler 13 sind mit den Heizmitteln 25 für das Flüssigkeitsbad 26 und mit Pumpeinrichtungen für die Heizflüssigkeit gekoppelt. Bei eventuellen Abweichungen der Temperatur vom vorgegebenen Sollwert geben die Temperaturfühler 13 ein entsprechendes Signal weiter, um die Heizleistung der Heizmittel 25 und/oder die Pumpleistung der Pumpen entsprechend anzupasssen und die Temperatur auf dem vorgewählten Wert zu stabilisieren. Zwischen dem oberen Boden 10 und dem Mantel des Gehäuses 4 ist eine wärmeisolierende Dämmschicht 27vorgesehen, in welche die Heizschlangen 11 eingebettet sind. Auf diese Weise kann eine Wärmeabgabe nach aussen deutlich reduziert werden.

Der Drehteller 7 ist mit in den Figuren nicht dargestellten Antriebsmitteln verbunden, welche im unteren Teil 3 der tischähnlichen Anordnung 23 untergebracht sind. Als Antriebsmittel dient vorzugsweise ein regelbarer Schneckengetriebemotor. Über eine Steuereinheit 20, die auf der Platte 2 montiert ist und mit den Antriebsmitteln verbunden ist, kann die Drehzahl der Antriebsmittel vorgewählt werden.

Die spiralenförmig angeordnete kanalförmige Transportbahn P erstreckt sich von der Zuführöffnung 5 bis zur Abführöffnung 6 des zylindrischen Gehäuses 4. Gemäss dem in den Figuren dargestellten Ausführungsbeispiel der erfindungsgemässen Vorrichtung ist die Zuführöffnung 5 etwa in der Umgebung des Zentrums des Gehäuses 4 angeordnet (Fig. 1), während die Abführöffnung 6 im seitlichen Mantel des zylindrischen Gehäuses 4 vorgesehen ist. Die Zuführöffnung 5 mündet in einen etwa vertikal angeordneten Schacht 21, der sich von der Oberseite des Gehäuses 4 durch den oberen Boden 10 bis kurz vor den Drehteller 7 erstreckt. Der Schacht weist einen etwa kreisförmigen Querschnitt auf, und ist derart ausgebildet, dass sich sein Durchmesser von der Zuführöffnung 5 aus in Richtung des Drehtellers 7 beispielsweise in Stufen verkleinert. Es versteht sich, dass der Schacht auch mit im wesentlichen kontinuierlich sich verjüngendem Durchmesser ausgebildet sein kann. Unmittelbar vor dem Drehteller besitzt er einen Durchmesser von etwa 30 mm bis etwa 35 mm. Im Bereich des kanalförmigen Transportweges P ist die der Drehrichtung zugewandte Seitenwand des Schachtes 21 etwa über die Höhe des Transportweges P weggelassen. Statt dessen erstreckt sich im oberen Bereich der Mündung des Schachtes 21 ein Abstreifer 22, beispielsweise ein Abstreifblech, etwa 20 mm bis etwa 40 mm in Richtung des Transportweges P. Wie in Fig. 1 dargestellt, ist wenigstens etwa 60 mm abwärts der Mündung des Schachtes 21, in Drehrichtung des Drehtellers 7 gesehen, eine Austrittsöffnung 15 einer Dispensiereinrichtung 14 angeordnet. Die Dispensiereinrichtung 14 ist beispielsweise an der Oberseite des zylindrischen Gehäuses 4 angeordnet und mit einem nicht dargestellten Reservoir für eine zu dispensierende Farbstofflösung verbunden. Die Austrittsöffnung 15 mündet beispielsweise durch den Mantel des Gehäuses 4 und durch den oberen Boden 10 oberhalb der innersten Windung der spiralenförmigen Transportbahn P. Es kann aber auch, wie dargestellt, im Gehäusemantel und im oberen Boden ein Sichtfenster 28 ausgespart sein, welches sich etwa vom Schacht 21 bis etwa 100 mm in Richtung der innersten Windung der Transportbahn erstreckt. In diesem Fall ist eine Zuführleitung mit der Austrittsöffnung einfach durch dieses Fenster geführt. Zwischen der Mündung der Austrittsöffnung 15 und der Mündung des Schachtes 21 ist im Bereich der innersten Windung des Transportweges P eine Lichtschranke 19, vorzugsweise ein Infrarot-Taster, vorgesehen. Diese ist mit der Dispensiereinrichtung 14 verbunden und liefert Steuerimpulse für die Aktivierung der Dispensierung der Farbstofflösung.

Oberhalb und unmittelbar anschliessend an der Rand der Zuführöffnung 5 endet ein Transportmittel 16, welches beispielsweise ein endlos umlaufendes, motorisch antreibbares Förderband umfasst, dessen Breite etwa dem Abstand s benachbarter Windungen des spiralenformigen Führungsorganes entspricht, und welches bei dem dargestellten Ausführungsbeispiel nach Art einer Rampe zur Zuführöffnung 5 hin leicht ansteigt. Am Ende des Förderbandes ist unmittelbar vor der Zuführöffnung ein einige Millimeter, beispielsweise etwa 3 mm bis 6 mm hoher Absatz 17 vorgesehen. Die Antriebsgeschwindigkeit des Förderbandes und die Rotationsgeschwindigkeit des Drehtellers 7 sind aufeinander abstimmbar.

Gemäss Fig. 3 ist im Anschluss an die Abführöffnung 6 eine Transportrampe 18 vorgesehen, derem Breite etwa dem Abstand s zwischen benachbarten Windungen des spiralenförmig angeordneten Führungsorgans 9 entspricht. Die Transportrampe ist etwa tangential zum Umfang des Drehtellers 7 orientiert. Die ausgangsseitige Transportrampe 18 kann wie eingangsseitig ein motorisch antreibbares Förderband umfassen, sie kann aber wie dargestellt auch nur als Gleitrampe ausgebildet sein.

Über das Transportmittel 16 sind in Giessformen oder in speziellen Färbeformen F enthaltene ophthalmische Linsen, insbesondere Kontaktlinsen, zur Zuführöffnung 5 transportierbar. Die Formen können von Hand oder maschinell auf das Transportmittel 16 aufgesetzt werden, das Transportmittel kann aber auch Bestandteil einer grösseren weitgehend vollautomatisierten Fertigungsstrecke für ophthalmische Linsen sein. Die Formen F werden über das Förderband zu der Zuführöffnung 5 transportiert. Am Ende des Transportbandes stossen die Formen F mit ihrer Unterkante gegen den Absatz 17 und kippen in den Schacht 21. Dabei werden die Formen um 180° gedreht, sodass die zuvor untere Seite der Formen, mit der sie auf dem Förderband aufgelegen sind, nun nach oben weist. Dieser Vorgang wird durch die Verwendung von Formen F, die eine Formhälfte aufweisen, welche ein etwas grösseres Gewicht als die andere besitzt, unterstützt. In diesem Fall werden die Formen F mit der leicheren Formhälfte nach unten auf das Förderband aufgesetzt. Die derart kopflastigen Formen F kippen dann umso leichter in der vorgesehenen Stellung in den Schacht 21. Die Formen F fallen den Schacht 21 hinab und werden, unten angelangt, von den Rippen oder Leisten 8 auf dem rotierenden Drehteller 7 mitgenommen. Der Abstreifer 22 im Anschluss an die Mündung des Schachtes 21 gewährleistet eine korrekte Lage jeder Form F in dem von zwei aufeinanderfolgenden Mitnahmerippen 8 definierten Bereich C der innersten Windung der spiralenförmigen Transportbahn P.

Durch die Rotation des Drehtellers 7 gleiten die Formen entlang des Führungsorgans 9 langsam nach aussen in Richtung des Umfangs des Drehtellers 7 und der Abführöffnung 6, wo sie über die Transportrampe 18 beispielsweise in einen Sammelbehälter transportiert werden oder zu weiteren Bearbeitungsstationen geführt werden. Kurz nach dem Abstreifer 22 passieren die Formen die Lichtschranke 19. Die Lichtschranke 22 ist mit der Dispensiereinrichtung 14 verbunden und spricht immer nur dann an, wenn sie von einer Form passiert wird. Dabei löst sie bei Bedarf die zeitgerechte Zugabe einer vorbestimmbaren Menge der Farbstofflösung über die nachfolgende Austrittsöffnung 15 in eine einseitig offen ausgebildete Färbeform F aus, in welche die zu färbende Linse eingebettet ist. Üblicherweise werden etwa 1,0 ml bis etwa 5,0 ml, vorzugsweise etwa 1,5 ml Farbstofflösung zugegeben. Soll die Vorrichtung zur Wärmebehandlung von ophthalmischen Linsen zur Polymerisation eines in einer Giessform F enthaltenen Monomerengemisches verwendet werden, so ist die Dispensiereinrichtung 14 abschaltbar.

Die erfindungsgemäss ausgebildete Vorrichtung zur Wärmebehandlung von ophthalmischen Linsen ist für einen kontinuierlichen Betrieb bestens geeignet. Die spiralenförmig angeordnete Transportbahn P erlaubt eine sehr kompakte Ausbildung der Vorrichtung 1, selbst bei verhältnismässig langen Transportwegen, um die erforderliche Wärmebehandlungsdauer von etwa 15 min bis etwa 90 min zu garantieren. Bei einer Länge des Transportweges P innerhalb der Vorrichtung 1 von etwa 20 m bis etwa 30 m beträgt der Platzbedarf der Vorrichtung nur etwa 1,6 m·1,6 m. Die erfindungsgemässe Anordnung der Heizelemente 11 und 12 gewährleistet eine sehr gleichmässige Wärmebehandlung der durch die Vorrichtung transportierten Giessformen F mit dem zu polymerisierenden Monomerengemisch bzw. mit der zu färbenden Kontaktlinse. Dadurch, dass die Heizschlangen 11 bzw. 12 oberhalb bzw. unterhalb der Transportbahn P spiralenförmig angeordnet sind und im wesentlichen deckungsgleich mit der Transportbahn P für die Formen F mit den ophthalmischen Linsen sind, durch die Abschottung der einzelnen Windungen der spiralenförmigen Transportbahn P durch das spiralenförmig angeordnete Führungsorgan 9 aus schlecht wärmeleitendem Material wird die Wärmestrahlung auf den Bereich der Transportbahn P konzentriert. Jede Form befindet sich während des Transportes durch die Vorrichtung 1 immer innerhalb eines einerseits von den benachbarten Windungen des Führungsorganes 9 abgeschotteten und andererseits von zwei aufeinanderfolgenden Mitnahmerippen 8 begrenzten Teilbereichs C der Transportbahn, in dem eine sehr homogene Temperaturverteilung herrscht.

Die Heizspiralen 11 und 12 werden von der thermostatisierbaren Heizflüssigkeit durchströmt. Dies erlaubt es die Temperatur innerhalb des Transportkanals P sehr einfach zu regeln, indem die Temperatur der Flüssigkeit im Flüssigkeitsbad 26 erhöht oder erniedrigt wird und/oder die Strömungsgeschwindigkeit der beheizten Flüssigkeit durch das Röhrensystem verändert wird. Gegenüber Schwankungen der Umgebungstemperatur ist diese Form der Heizung ebenfalls relativ unempfindlich, da die Wärmekapazität des Flüssigkeitsbades 26 im allgemeinen relativ gross ist und da die Flüssigkeit im allgemeinen relativ träge auf derartige Temperaturschwankungen reagiert. Zudem sind an verschiedenen Punkten der Transportbahn P, entlang der die Formen F geführt werden, mehrere Temperaturfühler 13 angeordnet, welche die örtliche Temperatur im Transportkanal P überwachen. Bei eventuellen Abweichungen der Temperatur vom vorgegebenen Sollwert geben die Temperaturfühler ein entsprechendes Signal weiter, um die Heizleistung der Heizmittel und/oder die Pumpleistung der Pumpen entsprechend anzupasssen. Vorzugsweise werden Temperaturen von etwa 40°C bis etwa 70°C, vorzugsweise etwa 56°C gewählt.

Durch die Verwendung eines Schneckengetriebemotors, dessen Drehgeschwindigkeit vorzugsweise von 0 weg regelbar ist, kann durch Veränderung der Drehgeschwindigkeit des Drehtellers 7, bei vorgegebener Länge der Transportbahn P für die Formen F, die Dauer der Wärmebehandlung des in den Giessformen F befindlichen, zu polymerisierenden Monomerengemisches bzw. der in den Färbeformen F befindlichen zu färbenden Kontaktlinsen den erforderlichen optimalen Zeiten angepasst werden.

Die erfindungsgemässe Vorrichtung ist kompakt im Aufbau und erlaubt einen kontinuierlichen Betrieb. Sie ist vielfältig bezüglich ihrer Einsatzmöglichkeiten, beispielsweise als Färbetrockenofen für Formen mit einer bestimmten Menge einer Farbstofflösung und einer zu färbenden Kontaktlinse oder auch als Polymerisationsofen für innerhalb von Giessformen enthaltenes Monomerengemisch zur Herstellung von Kontaktlinsen. Insbesondere erlaubt es die Konstruktion der Vorrichtung auch, diese in weitgehend vollautomatische Fertigungsstrassen für Kontaktlinsen zu integrieren.

## Patentansprüche

1. Vorrichtung zur Wärmebehandlung von ophthalmischen Linsen, insbesondere von Kontaktlinsen, welche ein geschlossen ausgebildetes etwa zylindrisches Gehäuse (4) mit einer Zuführ- und mit einer Abführöffnung (5,6), Transportmittel für den Transport der innerhalb von Formen befindlichen ophthalmischen Linsen entlang einer innerhalb des Gehäuses (4) angeordneten, die Zuführ- und die Abführöffnung verbindenden offenen Transportbahn (P) und innerhalb des Gehäuses (4) angeordnete Heizmittel (11,12) umfasst, dadurch gekennzeichnet, dass die Transportbahn (P) innerhalb des Gehäuses (4) im wesentlichen spiralenförmig ausgebildet ist und dass die Heizmittel (11,12) im wesentlichen ober- und unterhalb der Transportbahn (P) angeordnet sind.

2. Vorrichtung nach Anspruch 1, dadurch gekennzeichnet, dass die Heizmittel (11,12) ober- und unterhalb der Transportbahn (P) etwa spiralenförmig angeordnet sind und im wesentlichen deckungsgleich mit der Transportbahn (P) für die ophthalmischen Linsen sind.

3. Vorrichtung nach Anspruch 1 oder 2, dadurch gekennzeichnet, dass die Heizmittel (11,12) ober- und unterhalb der Transportbahn (P) als System von flüssigkeitsdurchströmten röhrenförmigen Heizschlangen ausgebildet sind, die mit einem thermostarisierbaren Flüssigkeitsbad (25,26) verbunden sind.

4. Vorrichtung nach einem der vorangehenden Ansprüche, dadurch gekennzeichnet, dass die Heizmittel (11,12) auf zwei ortsfest innerhalb des Gehäuses (4) in einem Abstand (d) von etwa 40 mm bis etwa 60 mm übereinander angeordneten etwa kreisförmigen Böden (10,24) angeordnet sind, dass die Transportmittel durch einen zwischen dem oberen und dem unteren Boden (10,24) angeordeten rotierbaren Drehteller (7) gebildet sind, und dass die Transportbahn (P) durch ein etwa spiralenförmig am oberen Boden (10) angeordnetes und vertikal vom oberen Boden (10) in Richtung des Drehtellers (7) abstehendes Führungsorgan (9) festgelegt ist.

5. Vorrichtung nach Anspruch 4, dadurch gekennzeichnet, dass der Drehteller (7) in einem Abstand (w) von etwa 30 mm bis etwa 35 mm vom oberen Boden (10) angeordnet ist.

6. Vorrichtung nach Anspruch 4 oder 5, dadurch gekennzeichnet, dass die dem oberen Boden (10) zugewandte Oberseite des Drehtellers (7) mit radial verlaufenden Rippen, Leisten (8) oder ähnlichen Mitnahmeelementen versehen ist, die sich von etwa der Mitte des Drehtellers bis etwa an den äusseren Rand des Drehtellers erstrecken.

7. Vorrichtung nach Anspruch 6, dadurch gekennzeichnet, dass sich das Führungsorgan (9) wenigstens bis zur Hälfte des Abstandes (w) zwischen dem oberen Boden (10) und dem Drehteller (7) erstreckt und vorzugsweise bis kurz vor die Rippen, Leisten (8) oder ähnlichen Mitnahmeelemente reicht.

8. Vorrichtung nach einem der Ansprüche 4 bis 7, dadurch gekennzeichnet, dass benachbarte Windungen des spiralenförmig angeordneten Führungsorgans (9) einen Abstand (s) von etwa 35 mm bis etwa 45 mm aufweisen.

9. Vorrichtung nach einem der Ansprüche 4 bis 8, dadurch gekennzeichnet, dass das Führungsorgan (9) als thermisches Abschottorgan gegenüber der jeweils benachbarten Windung der Transportbahn (P) ausgebildet ist.

10. Vorrichtung nach einem der Ansprüche 4 bis 9, dadurch gekennzeichnet, dass die Drehteller (7) motorisch antreibbar ist und dass seine Drehgeschwindigkeit regelbar ist.

11. Vorrichtung nach Anspruch 10, dadurch gekennzeichnet, dass der Antrieb für den Drehteller (7) ein Schneckengetriebemotor ist.

12. Vorrichtung nach einem der Ansprüche 4 bis 11, dadurch gekennzeichnet, dass die Zuführöffnung (5) in der Umgebung des Zentrums des Gehäuses (4) angeordnet ist, während die Abführöffnung (6) im Bereich der Seitenwandung des Gehäuses vorgesehen ist.

13. Vorrichtung nach Anspruch 12, dadurch gekennzeichnet, dass die Zuführöffnung (5) in einen vertikal angeordneten Schacht (21) mündet, der sich von der Oberseite des Gehäuses (4) durch den oberen Boden (10) bis kurz vor die Drehscheibe (7) erstreckt.

14. Vorrichtung nach Anspruch 13, dadurch gekennzeichnet, dass der Schacht (21) einen etwa kreisförmigen Querschnitt aufweist, dessen Durchmesser von etwa 30 mm bis etwa 35 mm beträgt.

15. Vorrichtung nach Anspruch 13 oder 14, dadurch gekennzeichnet, dass oberhalb der Zuführöffnung (5) ein Transportmittel, beispielsweise ein endlos umlaufendes, motorisch antreibbares Förderband (16) endet, über welches die die ophthalmischen Linsen enthaltenden Formen (F) zu der Zuführöffnung (5) aansportierbar sind.

16. Vorrichtung nach Anspruch 15, dadurch gekennzeichnet, dass an der Mündung des Schachtes (21) vor der Drehscheibe (7) ein Abstreifer (22) angeordnet ist, der zur Sicherstellung der korrekten Lage der die ophthalmischen Linsen enthaltenden Formen (F) vorgesehen ist.

17. Vorrichtung nach einem der Ansprüche 12 bis 16, dadurch gekennzeichnet, dass Abführöffnung (6) in eine ausserhalb des Gehäuses (4) angeordnete Transportrampe (18) mündet welche etwa tangential zum Umfang des Drehtellers (7) orientiert ist.

18. Vorrichtung nach einem der vorangehenden Ansprüche, dadurch gekennzeichnet, dass eine Dispensiervorrichtung (14) für eine dosierbare Menge einer Farbstofflösung vorgesehen ist, deren Austrittsöffnung (15) nach der Zuführöffnung (5) im Bereich der innersten Windung der Transportbahn (P) angeordnet ist.

19. Vorrichtung nach Anspruch 18, dadurch gekennzeichnet, dass zwischen der Zuführöffnung (5) und der Austrittsöffnung (15) der Dispensiervorrichtung (14) eine Lichtschranke (19), vorzugsweise ein Infrarot-Lichttaster angeordnet ist.

20. Verwendung einer Vorrichtung (1) nach einem der vorangehenden Ansprüche als Färbetrockenofen für in einseitig offen ausgebildete Färbeformen (F) eingebettete zu färbende Kontaktlinsen.

21. Verwendung einer Vorrichtung (1) nach einem der vorangehenden Ansprüche als Polymerisationsofen zur Polymerisation von innerhalb von Giessformen (F) enthaltenem Monomerengemisch zur Herstellung von Kontaktlinsen.
